# EUROPÄISCHE PATENTSCHRIFT

(11) **EP 0 855 778 B1**
(45) Veröffentlichungstag und Bekanntmachung des Hinweises auf die Patenterteilung: **14.08.2002**
(21) Anmeldenummer: 98100240.5
(22) Anmeldetag: 08.01.1998
(51) Int. Cl.: H02H 3/12, H02H 1/06

(54) **Netzfreischalter**
Mains isolator
Découplage d'alimentation

(30) Priorität: 24.01.1997 AT 10097
(43) Veröffentlichungstag der Anmeldung: 29.07.1998
(73) Patentinhaber: Latec AG, 8702 Zollikon (CH)
(72) Erfinder: Oppitz, Hans, 6068 Mils (AT); Oppitz, Emanuel, 6068 Mils (AT)
(74) Vertreter: Kador & Partner

(56) Entgegenhaltungen:
- DE-A- 2 361 432
- DE-A- 2 411 344
- DE-A- 2 624 316
- DE-A- 2 642 267

## Beschreibung

Die Erfindung betrifft einen Netzfreischalter mit einem schaltenden Element und einer Sensorschaltung. Herkömmliche Netzfreischalter werden im Zählerkasten auf einer Hutschiene montiert und schalten die ausgewählten Kreise ab. Die Schalter haben eine mit Sicherungsautomaten vergleichbare Baugröße, sodaß eine externe Montage nur mit großem Aufwand möglich ist. Technisch weisen die Netzfreischalter einen Kleintransformator zum Herstellen der Fühlerspannung, eine Sensorelektronik und ein Relais auf. Sie sind daher auch kostenintensiv (vgl. DE-A-2 642 267, DE-A-2 411 344, DE-A-2 624 316).

Die Erfindung löst die Aufgabe durch die Merkmale definiert in Auspruch 1. Hierbei werden moderne Halbleiterbauteile anstelle von Transformatoren und Relais eingesetzt Durch die neuen Bauteile ist es möglich, die Baugröße so weit zu verringern, daß eine Montage des Netzfreischalters in einer Unterputzdose möglich ist.

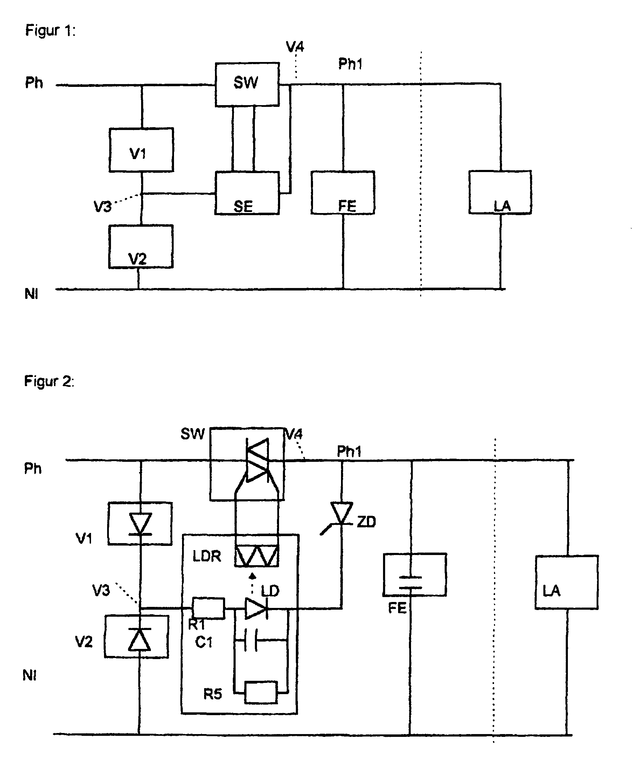

Figur 1 zeigt das Blockschaltbild des Netzfreischalters. Das Schaltbild zeigt die zwei Stromversorgungspfade (V1, V2), das schaltende Element (SW), die Sensorschaltung (SE) und die Funkentstörung (FE). Die angeschlossene Last (LA) wird nur symbolhaft dargestellt. Die exakte Funktion wird im folgenden beschrieben:

Der Netzfreischalter besteht aus zwei getrennten Stromversorgungen (V1, V2) für die Sensorspannung, dem Sensorelement (SE), dem Schalter (SW) und der Funkentstörschaltung (FE). Die Anordnung arbeitet so, daß über zwei getrennte Stromversorgungen (V1, V2) die Sensorspannung für das Feststellen einer Last am Netz bereitgestellt wird. Im Knoten (V3) werden beide Sensorspannungen zusammengeführt und zum Sensorelement (SE), einem Stromflußdetektor, geleitet. Im Sensorelement können verschiedenste Techniken angewendet werden, um den Stromfluß bei Anschließen einer Last (LA) festzustellen. Die Sensorspannung wird am Punkt (V4) in die Ableitung (Ph1) der geschalteten Stromversorgung eingeleitet. Ohne Last (LA) am Ausgang der Schaltung wird das Sensorelement (SE) über die Stromversorgung (V1) versorgt, sodaß die erforderliche Sensorspannung im Knoten (V4) und im Kondensator (FE) zum Feststellen einer Last aufgebaut wird. Sobald ein Stromfluß durch eine angeschlossene Last (LA) festgestellt wird, schaltet das Sensorelement (SE) den Stromschalter (SW) durch und die angeschlossene Last wird mit dem erforderlichen Strom versorgt. Mit dem Durchschalten des Schalters (SE) in die Lage, daß (Ph) und (Ph1) miteinander verbunden sind, erfolgt die Versorgung des Sensorelementes (SE) über die Stromversorgung (V2). Der Kondensator (FE) dient weiters zur Funkentstörung.

Die Stromversorgung der Schaltung erfolgt über die Anschlüsse (Ph) für die Phase des Stromnetzes und (NI) für den Neutralleiter (Rückleitung).

Die schaltungstechnische Umsetzung des Stromfreischalters kann über mehrere Technologien erfolgen. Als Beispiel soll eine Lösung mit Halbleitern gezeigt werden.

Die Figur 2 zeigt eine beispielhafte Ausführung eines Netzfreischalters nach den obigen Prinzipien: Der Netzfreischalter besteht aus zwei antiparallel geschalteten Triacs als schaltendes Element (SW), deren Gateektroden über einen lichtempfindlichen Widerstand (LDR) im Stromsensor (SE) verbunden sind. Der lichtempfindliche Widerstand (LDR) wird über eine Leuchtdiode (LD) angesteuert, wobei der Strom bei Feststellen einer Last (LA) über die Leuchtdiode (LD) fließt und sie zum Aufleuchten bringt. Der Sensorstrom wird durch den Widerstand (R1) begrenzt. Sobald die Last abgeschaltet wird, reicht der Strom durch das Sensorelement SE nicht mehr aus, die Triacs (SW) offen zu halten. Der Stromfluß von (Ph) nach (Ph1) wird damit unterbrochen und die Schaltung kippt in den früheren Zustand mit dem Aufbau der Sensorspannung über die Stromversorgung (V1) zurück Der Strom durch die Sensorschaltung (SE) wird durch einen Widerstand (R1) und eine in Serie mit (R1) befindliche spannungsbegrenzende Diode (ZD) begrenzt, sodaß der Strom durch die Sensorschaltung (SE) geringer ist als der Haltestrom der Triacs im schaltenden Element (SW). Der Kondensator (C1), parallel zur Leuchtdiode (LD), hat die Funktion, während des Umschaltens vom Sensorbetrieb auf die Vollversorgung einen stabilen Betriebszustand zu sichern und Oberwellen bzw. Spannungsspitzen zu unterdrücken. Der Widerstand (R5) verhindert Fehlauslösungen der Sensorschaltung bei Netzstörungen wie Oberwellen und Spannungsspitzen.

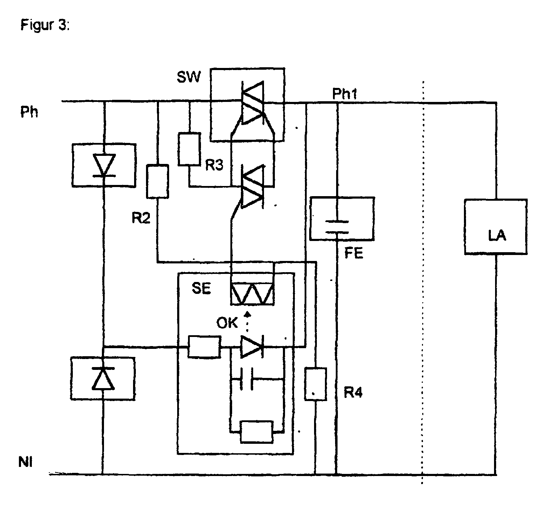

Eine Variante des beschriebenen Netzfreischalters zeigt die Figur 3: In dieser Variante wird die Auslösung zwischen den Gateelektroden der antiparallel geschalteten Triacs SW über einen weiteren Triac geschaltet. Die Schaltung zeigt eine entsprechende Modifikation des Sensorelements (SE) mit einem Triac (TRI) und einem konventionelllen Optokoppler (OK). Über die Widerstände (R2 und R4) wird die Betriebsspannung für die Sekundärseite des Optokopplers (OK) bereitgestellt. Der Widerstand (R3) leitet eventuell störende Restströme durch den steuernden Triac (TRI) zur Anode (A1) des Tracs (SW) ab und verhindert damit ein unkontrolliertes Zünden der antiparallelen Triacs (SW). Anstelle des schaltenden Triacs (TRI) kann auch ein bipolarer Transistor oder ein Feldeffekttransistor verwendet werden. Die Versorgung der Hilfsschaltung mit Energie kann über die genannten Widerstände (R2) und (R4), aber auch über andere Schaltungen, wie z. B. Phasenschieberkondensator als Strombegrenzer und einer anschließenden Gleichrichtung oder einem Transformator erfolgen. Entsprechende Schaltungen sind seit langem Stand der Technik und daher nicht weiter auszuführen. Bei Einsatz von Hilfsenergie für die Steuerung der Triacs (SW) kann auch ein einzelner Triac ausreichen.

## Patentansprüche

1. Netzfreischalter mit einem schaltenden Element (SW) zum Versorgen eine Last (LA) mit Strom und einer Sensorschaltung (SE) zum Schalten des schaltenden Elementes (SW)
**dadurch gekennzeichnet, daß**
die Sensorschaltung (SE) von zwei Stromversorgungszweigen (V1, V2) über einen Knoten (V3) gespeist wird, wobei zum Feststellen einer Last (LA) am Ausgang des Netzfreischalters
- bei fehlender Last (LA), das Sensorelement (SE) über den einen Stromversorgungszweig (V1) versorgt wird (Sensorbetrieb), und
- bei angeschlossener Last (LA), das Sensorelement (SE) über den anderen Stromversorgungszweig (V2) versorgt wird (Vollversorgung).

2. Netzfreischalter nach Anspruch 1, **dadurch gekennzeichnet, daß** die Sensorschaltung (SE) über ein spannungsbegrenzendes Element (ZD) betrieben wird.

3. Netzfreischalter nach den Ansprüchen 1 und 2, **dadurch gekennzeichnet, daß** die Sensorschaltung (SE) einen Kondensator (C1) parallel zur Leuchtdiode (LD) aufweist.

4. Netzfeischalter nach den Ansprüchen 1 bis 3, **dadurch gekennzeichnet, daß** ein Ladekondensator (FE) am Ausgang der Netzfreischaitung, zwischen den Anschlüssen Ph1 und Nl, vorhanden ist.

5. Netzfreischalter nach den Ansprüchen 1 und 2, **dadurch gekennzeichnet, daß** die Sensorspannung zwischen den Anschlüssen Ph1 und NI durch ein spannungsbegrenzendes Element (ZD) in der Versorgung des Sensorelement (SE) auf niedrigem Niveau gehalten wird.

6. Netzfreischalter nach den Ansprüchen 1 bis 3, **dadurch gekennzeichnet daß** das schaltende Element (SW) aus Triacs besteht deren Gateelektroden über ein weiteres schaltendes Element, z. b. einen weiteren Triac, Thyristor, Transistor oder Feldeffekttransistor, beispielhaft ein Triac (TRI), geschaltet werden.

7. Netzfreischalter nach Anspruch 5, **dadurch gekennzeichnet, daß** die Hilfsenergie aus einem Spannungsteiler (R2 und R4) oder einer anderen Schaltung zur Bereitstellung von Hilfsenergie zur Steuerung des Sensorelements (SE) verwendet wird.

8. Netzfreischalter nach Anspruch 6, **dadurch gekennzeichnet, daß** bei Verwendung von Hilfsenergie zur Steuerung des schaltenden Elements (SW) ein Triac (TRI) ausreicht.

## Claims

1. A mains cut-off switch with a switching element (SW) for supplying a load (LA) with current and a sensor circuit (SE) for switching the switching element (SW), **characterized in that**
the sensor circuit (SE) is fed by two power supply branches (V1, V2) via a node (V3), whereby for detecting a load (LA) at the output of the mains cut-off switch
- if there is no load (LA), the sensor element (SE) is supplied via one power supply branch (V1) (sensor operation), and
- if load (LA) is connected, the sensor element (SE) is supplied via the other power supply branch (V2) (full supply).

2. A mains cut-off switch according to claim 1, **characterized in that** the sensor circuit (SE) is operated via a voltage-limiting element (ZD).

3. A mains cut-off switch according to claims 1 and 2, **characterized in that** the sensor circuit (SE) has a capacitor (C1) in parallel with the light-emitting diode (LD).

4. A mains cut-off switch according to claims 1 to 3, **characterized in that** an input capacitor (FE) is present at the output of the mains cut-off switch, between the connections Ph1 and NI.

5. A mains cut-off switch according to claims 1 and 2, **characterized in that** the sensor voltage between the connections Ph1 and NI is held at low level by a voltage-limiting element (ZD) in the supply of the sensor element (SE).

6. A mains cut-off switch according to claims 1 to 3, **characterized in that** the switching element (SW) consists of triacs whose gate electrodes are switched via a further switching element, e.g. a further triac, thyristor, transistor or field-effect transistor, by way of example a triac (TRI).

7. A mains cut-off switch according to claim 5, **characterized in that** the auxiliary power from a voltage divider (R2 and R4) or another circuit for providing auxiliary power is used for controlling the sensor element (SE).

8. A mains cut-off switch according to claim 6, **characterized in that** one triac (TRI) suffices for controlling the switching element (SW) when auxiliary power is used.

## Revendications

1. Déconnecteur d'alimentation, comportant avec un élément (SW) de commutation pour l'alimentation d'une charge (LA) en courant et un circuit de capteur (SE) pour la commutation de l'élément de commutation (SW),
**caractérisé en ce que**
le circuit de capteur (SE) est alimenté par deux branches d'alimentation de courant (V1, V2) au moyen d'un noeud (V3), et pour la détection d'une charge (LA) à la sortie du déconnecteur d'alimentation :
- en cas d'absence de charge (LA), l'élément de capteur (SE) est alimenté au moyen d'une des branches d'alimentation en courant (V1) (mode capteur) et
- si la charge (LA) est raccordée, l'élément de capteur (SE) est alimenté au moyen de l'autre branche d'alimentation en courant (V2) (alimentation complète).

2. Déconnecteur d'alimentation selon la revendication 1, **caractérisé en ce que** le circuit de capteur (SE) est exploité au moyen d'un élément (ZD) limitant la tension.

3. Déconnecteur d'alimentation selon les revendications 1 et 2, **caractérisé en ce que** le circuit de capteur (SE) présente un condensateur (C1) parallèlement à la diode électroluminescente (LD).

4. Déconnecteur d'alimentation selon les revendications 1 à 3, **caractérisé en ce qu'**un condensateur de charge (FE) est présent à la sortie du déconnecteur d'alimentation entre les branchements Ph1 et NI.

5. Déconnecteur d'alimentation selon les revendications 1 et 2, **caractérisé en ce que** la tension de capteur entre les branchements Ph1 et NI est maintenue à un faible niveau par un élément (ZD) limitant la tension dans l'alimentation de l'élément de capteur (SE).

6. Déconnecteur d'alimentation selon les revendications 1 à 3, **caractérisé en ce que** l'élément de commutation (SW) est constitué de triacs, dont les électrodes de grille sont commutées au moyen d'un autre élément de commutation, par exemple un autre triac, thyristor, transistor ou transistor à effet de champ, par exemple un triac (TRI).

7. Déconnecteur d'alimentation selon la revendication 5, **caractérisé en ce que** l'énergie auxiliaire provenant d'un diviseur de tension (R2 et R4) ou d'un autre circuit pour la mise à disposition d'énergie auxiliaire est utilisée pour la commande de l'élément de capteur (SE).

8. Déconnecteur d'alimentation selon la revendication 6, **caractérisé en ce qu'**un triac (TRI) est suffisant pour commander l'élément de commutation (SW) lorsqu'on utilise de l'énergie auxiliaire.
